# EUROPEAN PATENT SPECIFICATION

(11) **EP 4 216 677 B1**
(45) Date of publication and mention of the grant of the patent: **03.09.2025**
(21) Application number: 23152146.9
(22) Date of filing: 18.01.2023
(51) Int. Cl.: H05B 47/19, H05B 47/18, H05B 47/175

(54) **A METHOD FOR CONFIGURING A CONTROL SYSTEM FOR CONTROLLING A PLURALITY OF LAMPS BY MEANS OF AN EXTERNAL WIRELESS COMMUNICATION DEVICE**
VERFAHREN ZUR KONFIGURATION EINES STEUERUNGSSYSTEMS ZUR STEUERUNG EINER VIELZAHL VON LAMPEN MITTELS EINER EXTERNEN DRAHTLOSEN KOMMUNIKATIONSVORRICHTUNG
PROCÉDÉ DE CONFIGURATION D'UN SYSTÈME DE COMMANDE POUR COMMANDER UNE PLURALITÉ DE LAMPES AU MOYEN D'UN DISPOSITIF DE COMMUNICATION SANS FIL EXTERNE

(30) Priority: 19.01.2022 CN 202210062816
(43) Date of publication of application: 26.07.2023
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: WANG, Ke, Ningbo, 315103 (CN); WANG, Linji, Ningbo, 315103 (CN); ZHAO, Pengyuan, Ningbo, 315103 (CN)
(74) Representative: 2K Patentanwälte Blasberg Kewitz & Reichel

(56) References cited:
- US-A1- 2012 235 579
- US-A1- 2022 210 884

## Description

### Technical Field

The present invention relates to the technical field of controlling lighting equipment, and relates in particular to a method of configuring a control system for controlling a plurality of lamps.

### Background of Invention

In the field of lighting it is known that lamps often need to be controlled in a group mode to meet the lighting needs in different areas. As an example for such a group mode it is for example known to control the light e.g. in a large meeting room with multiple DALI dimmers, by switching ON and OFF the group of lights by means of a single switch but also by dimming-up and dimming-down the group of lights by means of a single switch.

A common existing solution in the market is the use of DALI (Digital Addressable Lighting Interface) systems, which are currently difficult to employ caused by their complexity. The configuration of individual lamps is complicated by the need to identify them individually in an irregular or unstructured manner.

US 2012/235579 A1 discloses a method for providing occupancy-based variable lighting, wherein a presence and an absence of an occupant is detected, and an occupancy sensor signal is generated representative of an active state in which the presence of the occupant is detected, and an inactive state in which the absence of the occupant is detected. The method is performed in a mesh network, which does not disclose, however, a system environment including groups of lamps, each including one wireless communication lamp serving as a DALI control unit or a DALI gateway for all lamps of a respective group of lamps, and the particular communication scheme.

US 2022/210884 A1 discloses a method of commissioning or configuring a building control system comprising a plurality of electronic devices installed in a building each adapted to communicate over a communication network and comprising at least one light source adapted to emit light of a plurality of colors. Groups of lamps are not predetermined and sub-divided according to a respective wireless communication lamp which serves for bidirectional communication and is configured to serve as a DALI control unit or a DALI gateway of a respective group of lamps, for controlling all lamps of an associated group of lamps.

### Summary of Invention

In view of the above, it is an object of the present invention to provide an enhanced method of configuring a control system for controlling a plurality of lamps that enable a quick and intuitive configuration of a lighting system comprising a plurality of lamps and in particular to achieve a group control of lamps in a relatively simple manner, to thereby save time and labor cost required for configuring the lighting system.

This problem is solved by a method of configuring a control system for controlling a plurality of lamps as claimed in claim 1. Further advantageous embodiments are the subject-matter of the dependent claims.

### Technical effects of the present invention.

The configuration method of the multiple lamp control system of the present invention can complete the configuration of the lamp system quickly and intuitively and achieve the purpose of group control of lamps in a lighting system, and the operation is also relatively simple, which can save the time and labor cost of manually configuring a lamp system.

### Overview on drawings

Hereinafter, the general principles of the present invention will be disclosed for exemplary preferred embodiments and with reference to the accompanying drawings, in which
- Fig. 1: is a schematic diagram of a control system for controlling a plurality of lamps according to a preferred embodiment of the present invention; and
- Fig. 2: is a schematic flow diagram of a method of configuring a control system for controlling a plurality of lamps according to the embodiment of Fig. 1.

### Detailed Description of preferred Embodiments

The following specific embodiments of the present invention are described in further detail based on the accompanying drawings. It should be understood that the scope of protection of the present invention shall not be construed to be delimited to the following description of preferred embodiments of the present invention only.

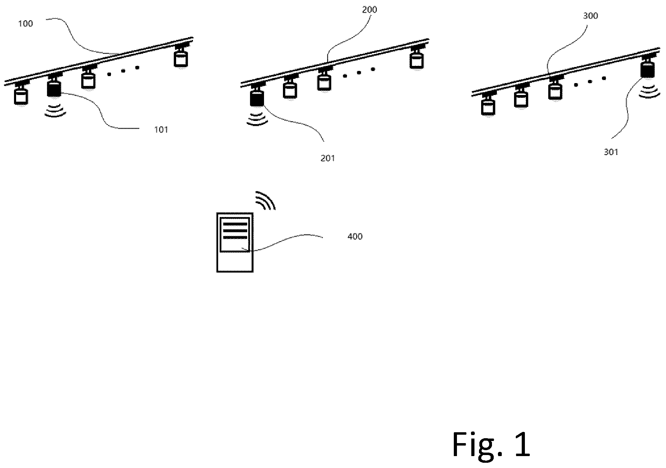

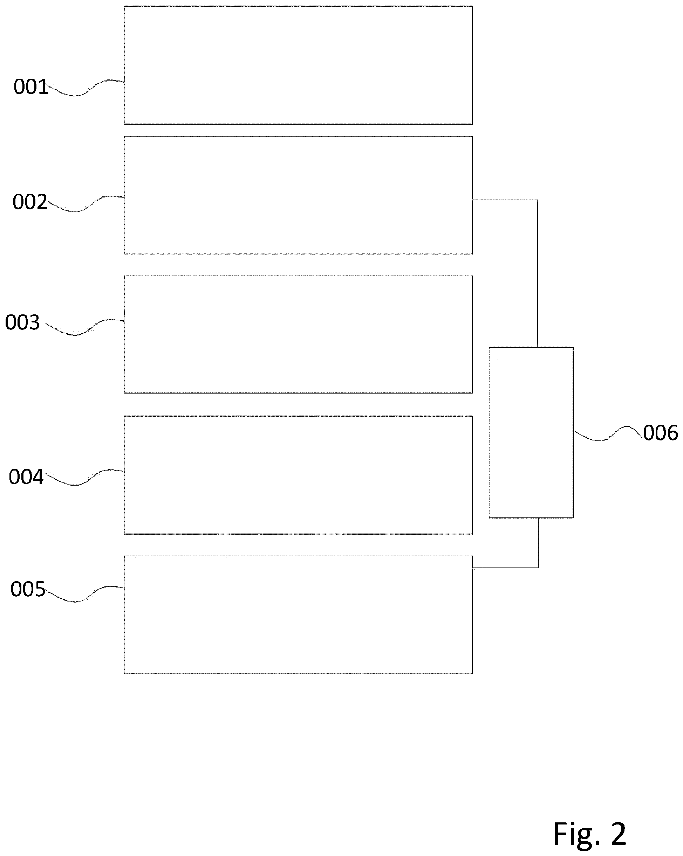

As shown in Figs. 1 and 2, in the method of configuring a control system for controlling a plurality of lamps according to the present invention, the control system includes or controls three groups of lamps, wherein each group of lamps communicates internally via the DALI protocol, and wherein each group of lamps is provided with a wireless lamp communication feature configured for communicating with external devices using a wireless communication node.

More specifically, the three groups of lamps include a first lamp group 100, a second lamp group 200 and a third lamp group 300, wherein the first lamp group 100 includes a first wireless communication lamp 101, the second lamp group 200 includes a second wireless communication lamp 201 and the third lamp group 300 includes a third wireless communication lamp 301. All lamps of a respective lamp group include a DALI interface so that all lamps of a respective group can be controlled individually via DALI short addresses and parameters, such as their intensity or light color can be changed as desired. Preferably, by means of bidirectional data exchange, a DALI control unit or a DALI gateway of a respective group, that may be included in the respective wireless communication lamp of a respective group, can query the status of all other lamps of the respective group or control equipment of all other lamps of a respective group or set their status.

The wireless communication node may be a separate wireless communication device included in each group of lamps 100-300, but is preferably a wireless communication module that may be added to the power supply of one lamp of a respective group of lamps 100-300. The control system for controlling a plurality of lamps of this embodiment includes a wireless communication module added to the power supply of some of the lamps in the respective group of lamps, preferably only to a single lamp of the lamps in the respective group of lamps, and the wireless communication module serves the functions of wiring / coupling, networking / grouping, and decoupling. In other words, the respective wireless communication module 101, 201, 301 of a respective group serves for communicating with an external wireless communication device, such as a smartphone, using a wireless communication protocol to thereby configure and control all lamps of the respective group of lamps.

The method of configuring a control system for controlling a plurality of lamps according to this embodiment may comprise in particular the following steps (cf. Fig. 2), assuming that the lighting system includes three groups of lamps 100-300:
step 001: providing a lamp system in a required area, the lamp system comprising at least two lamp groups, each lamp group comprising a wireless communication lamp configured for wireless communication and a plurality of lamps not configured for wireless communication. In the example of Fig. 1, the lamp system includes a first lamp group 100, a second lamp group 200 and a third lamp group 300, wherein the first lamp group 100 includes a first wireless communication lamp 101, the second lamp group 200 includes a second wireless communication lamp 201 and the third lamp group 300 includes a third wireless communication lamp 301, each group communicating internally via a DALI communication protocol. Each wireless communication lamp 101-301 serves as a wireless communication node and is configured for communicating with an external wireless communication device, such as a smartphone, using a wireless communication protocol to thereby configure and control all lamps of the respective group of lamps. Moreover, each wireless communication lamp 101-301 is configured to serve as a DALI control unit or a DALI gateway of a respective group of lamps 100-300. All lamps of a respective lamp group 100-300 include a DALI interface so that all lamps of a respective group 100-300 can be controlled individually via DALI short addresses and parameters, such as their intensity or light color can be changed as desired, by means of bidirectional data exchange with the DALI control unit or a DALI gateway of a respective group of lamps 100-300.
step 002: searching by means of a wireless communication device 400, in particular a handheld mobile configuration device, such as a smartphone, for wireless communication lamps in the proximity that potentially need to be configured and determining for each wireless communication lamp the respective signal strength of a wireless communication signal for wireless communication between the wireless communication device 400 and the respective wireless communication lamp.
   In the example of Fig. 1, the wireless communication device 400 will detect a total of three wireless communication lamps 101, 201, 301. In the next cycle (step 004 and optionally step 005) a different wireless communication lamp is selected for the lamp system, as outlined below. step 003: (first configuration step) communicating with that wireless communication lamp identified in step 002 having the strongest signal determined in step 002 (here, for example, the first wireless communication lamp 101), and controlling the state of this wireless communication lamp to be different from the states of all other wireless communication lamps, and carrying out networking for this wireless communication lamp (to establish a wireless communication with the wireless communication device 400) if this wireless communication lamp needs to be configured, and, if not, proceeding to step 004;
step 004: (second configuration step) communicating with the next wireless communication lamp identified in step 002 having the second strongest signal determined in step 002 (here, for example, the second wireless communication lamp 201), and controlling the state of this wireless communication lamp to be different from the states of all other wireless communication lamps, and carrying out networking for this wireless communication lamp (to establish a wireless communication with the wireless communication device 400) if this wireless communication lamp needs to be configured, and, if not, proceeding to step 005;
step 005: (third configuration step (optional)) communicating with the next wireless communication lamp identified in step 002 having the third strongest signal determined in step 002 (here, for example, the third wireless communication lamp 301), and controlling the state of this wireless communication lamp to be different from the states of all other wireless communication lamps, and carrying out networking for this wireless communication lamp (to establish a wireless communication with the wireless communication device 400) if this wireless communication lamp needs to be configured, and, if not, proceeding to step 006;
step 006: (if required, x-th configuration step) repeating steps 003 to 005 until an attempt has been made by the wireless communication device 400 with each of the wireless communication lamps identified in step 002 to carry out networking with each wireless communication lamp (to establish a wireless communication with the wireless communication device 400) if the respective wireless communication lamp needs to be configured, to thereby complete the networking of all the wireless communication lamps in the lighting system.

As will become apparent to the skilled person when studying the above disclosure, the total number of configuration steps 003 to 005 that are repeated in step 006 in a method according to the present invention will depend on the total number of groups of lamps in the lighting system having its own wireless communication lamp for wireless communication and configuration. Hence, the above example has assumed three groups of lamps 100-300 in the lighting system, as shown in Fig. 1.

As will become apparent to the skilled person when studying the above disclosure, the individual signal strengths identified in step 002 for the wireless communication lamps associated to the different groups of lamps will depend on the distance between the respective wireless communication lamp and the wireless communication device 400 used for wireless networking and configuration.

As will become apparent to the skilled person when studying the above disclosure, the wireless communication established in the respective step 003, 004, 005 ... between the wireless communication device 400 and the wireless communication lamp of a respective group of lamps may be used to configure all lamps of the respective group of lamps in a single step and using the same parameters, such as parameters for controlling light intensity or light color of all lamps of the respective group of lamps. For this purpose, the wireless communication lamp of a respective group of lamps may control all other lamps of this group via DALI short addresses and parameters by means of bidirectional data exchange using DALI. At the stage of the respective step 003, 004, 005 ..., the wireless communication lamp thus serves as the DALI control unit or DALI gateway for all other lamps of the respective group.

Of course, at the stage of the respective step 003, 004, 005 ..., each lamp of a respective group of lamps may be configured and set individually and with different parameters, such as parameters for controlling light intensity or light color of the respective lamp. For this purpose, at the stage of the respective step 003, 004, 005 ... additional configuration steps may be performed individually for each lamp of the respective group of lamps associated to the wireless communication lamp to which a wireless communication is established at the stage of the respective step 003, 004, 005 ....

As will become apparent to the skilled person when studying the above disclosure, the DALI interface required for configuring the lamps of each group of lamps may be integrated or provided in the driving power supply of each lamp of a respective group of lamps.

When it is desired to control and set a group of lamps by means of handheld mobile configuration device, such as a smartphone, (hereinafter commonly referred to as "wireless communication device"), the user needs to configure the communication module in the driving power supply of the wireless communication lamps to achieve that the wireless communication lamps, and the lamps of all groups of lamps, can be controlled by the wireless communication device, such as to perform the functions of dimming and other operations.

After completing the above networking, it is also possible to group different lamps by means of the wireless communication device, or to reconfigure the lighting system by designating the groups of lamps in a different manner, and after grouping or regrouping, it is possible to perform functions such as dimming and other operations for the groups of lamps by means of the wireless communication device.

If it is desired to delete (exclude) a lamp from an existing group of lamps in the lighting system, it may also be possible to delete or exclude (withdraw) at least one lamp from an existing group of lamps by means of the wireless communication device, and at a later stage it is possible to register this lamp again in the respective existing group. When the user wishes to replace the wireless communication equipment, the user can delete or exclude (withdraw) the lamp from the original equipment, so that the new equipment can be used for the lamp network.

If one considers the field of application and cost aspect of the control method according to the present invention, it is noted that only a few lamps are required to include a wireless module, namely the wireless communication lamps as outlined above, i.e. only a few lamps need to include the capability to communicate via a wireless communication protocol, and each of these few wireless communication lamps is used as a configuration node, and the function of controlling a plurality of lamps in a respective group of lamps is realized by utilizing the combination of DALI and wireless communication technology in the respective group of lamps.

As shown in Fig. 1, that wireless communication lamp which provide the wireless communication function in a respective group of lamps is used as the master node for the respective group of lamps, and all other lamps of the respective group of lamps without the wireless communication function communicate with this master node through DALI protocol. The wireless communication lamp providing the wireless communication function with the external wireless communication device is used as the node for wireless communication with this external wireless communication device, for configuration of lamps in the lighting system, and the wireless communication device can be informed of all the lamps in the field of sight in the above manner, combined with DALI communication, so as to realize the function of group control.

By judging the strength of the wireless communication signal, the distance between the lamp or wireless communication device to be configured and the handheld mobile configuration device (hereinafter referred to as "wireless communication device") can be judged. When the lamp or wireless communication device is deployed and set, the operator can walk around the site with the wireless communication device in his/her hand. By means of an optimized filtering algorithm, when the user approaches the lamp or wireless communication lamp he wants to configure and set, the lamp or wireless communication lamp will be displayed at the top of a lamp configuration list indicated e.g. on a display of the wireless communication device and this lamp or wireless communication lamp will be in a recognition state (flashing in the form of a blinking light). If the lamp or wireless communication lamp in the identification (recognition) state is the lamp or wireless communication lamp that the operator wants to configure, the operator can directly configure that lamp or wireless communication lamp. Otherwise, the operator can switch to the next lamp in the list of lamps indicated e.g. on a display of the wireless communication device for the wireless communication lamp to which a wireless communication has been established, e.g. using a voice command, and in particular a gesture (including but not limited to shaking / waggling the wireless communication device), etc. The lamp will be in the first row of the list of lamps, and the lamps will be recognized. If the lamp is the one the operator wants to configure, the operator can directly configure the lamp. The advantage of this configuration method is that its configuration is more intuitive, and the operation is also relatively simple.

As will become apparent to the skilled person studying the above disclosure, a further aspect of the present invention relates to a corresponding control system for controlling a plurality of lamps by means of an external wireless communication device, configured to carry out a control method as outlined above.

The above description only serves for a better understanding of the present invention, and shall not be construed to delimit the scope of protection of the present invention.

### List of reference numerals

- 100: first group of lamps
- 101: wireless communication lamp of first group of lamps 101
- 200: second group of lamps
- 201: wireless communication lamp of second group of lamps 201
- 300: third group of lamps
- 301: wireless communication lamp of third group of lamps 301
- 400: external wireless communication device

### Method steps

- 001: providing a lamp system in a required area, comprising at least two groups of lamps
- 002: searching for wireless communication lamps in the proximity of a wireless communication device
- 003: communicating with that wireless communication lamp identified in step 002 having the strongest signal determined in step 002
- 004: communicating with the next wireless communication lamp identified in step 002 having the second strongest signal determined in step 002
- 005: (optional) communicating with the next wireless communication lamp identified in step 002 having the third strongest signal determined in step 002
- 006: repeating steps 003 to 004 until an attempt has been made by the wireless communication device with each of the wireless communication lamps of the lamp system

## Claims

1. A method for configuring a control system for controlling a plurality of lamps by means of an external wireless communication device (400), comprising the steps of:
step 001: installing, in a required area, a lamp system comprising at least two groups of lamps (100, 200, 300), each group of lamps consisting of a plurality of lamps, each lamp including a DALI interface and communicating internally via a DALI protocol, wherein each group of lamps includes one wireless communication lamp (101, 201, 301) serving as a wireless communication node for wireless communication with the external wireless communication device (400), wherein each wireless communication lamp (101, 201, 301) is configured to serve as a DALI control unit or a DALI gateway of a respective group of lamps (100, 200, 300) so that all lamps of the respective group of lamps (100, 200, 300) are configured to be controlled by means of bidirectional data exchange with the respective wireless communication lamp (101, 201, 301) of the respective group of lamps (100, 200, 300);
step 002: searching by means of the external wireless communication device (400) and identifying wireless communication lamps in the proximity of the external wireless communication device (400), determining for each wireless communication lamp a respective signal strength of a wireless communication signal for wireless communication between the external wireless communication device (400) and the respective wireless communication lamp and sorting the wireless communication lamps (101, 201, 301) according to the determined respective signal strength in descending order;
step 003: communicating with that wireless communication lamp identified in step 002 having the strongest signal determined in step 002 and carrying out networking for that wireless communication lamp to establish a wireless communication with the external wireless communication device (400) if the lamps of that wireless communication lamp need to be configured, if not then proceed with step 004.
step 004: communicating with the next wireless communication lamp identified in step 002 having the next strongest signal determined in step 002 and carrying out networking for that wireless communication lamp to establish a wireless communication with the external wireless communication device (400) if the lamps of that wireless communication lamp need to be configured, if not then proceed with step 005;
step 005: repeating step 004 until networking has been carried out with each of the wireless communication lamps identified in step 002.

2. The method as claimed in claim 1, wherein the step of carrying out networking with a respective wireless communication lamp comprises:
controlling a state of the respective wireless communication lamp to be different from the states of all other wireless communication lamps identified in step 002.

3. The method as claimed in claim 2, wherein the step of controlling the state of the respective wireless communication lamp to be different from the states of all other wireless communication lamps identified in step 002 further comprises:
let the respective wireless communication lamp blink.

4. The method as claimed in any of the preceding claims, wherein all lamps of a respective group of lamps associated to the respective wireless communication lamp are configured in a single step and using parameters, whereby the parameters are the same for all lamps of respective group, such as parameters for controlling light intensity or light color of all lamps of the respective group of lamps.

5. The method as claimed in any of claims 1 to 3, wherein the lamps of a respective group of lamps associated to the respective wireless communication lamp are configured in different sub-steps and using different parameters, such as parameters for controlling light intensity or light color of the lamps of the respective group of lamps.

6. The method as claimed in any of the preceding claims, further comprising:
establishing a wireless communication between the external wireless communication device (400) and the respective wireless communication lamp triggered by shaking the external wireless communication device (400).

## Patentansprüche

1. Verfahren zum Konfigurieren eines Steuerungssystems zur Steuerung einer Vielzahl von Lampen mittels einer externen drahtlosen Kommunikationsvorrichtung (400), mit den folgenden Schritten:
Schritt 001: Installieren eines Lampensystems in einem erforderlichen Bereich, das mindestens zwei Gruppen von Lampen (100, 200, 301) umfasst, wobei jede Gruppe von Lampen aus mehreren Lampen besteht, wobei jede Lampe eine DALI-Schnittstelle aufweist und intern über ein DALI-Protokoll kommuniziert, wobei jede Gruppe von Lampen eine für eine drahtlose Kommunikation geeigneten Lampe (101, 201, 301) umfasst, die als drahtloser Kommunikationsknoten für die drahtlose Kommunikation mit der externen drahtlosen Kommunikationsvorrichtung (400) dient, wobei jede für eine drahtlose Kommunikation geeigneten Lampe (101, 201, 301) so konfiguriert ist, dass sie als DALI-Steuereinheit oder als DALI-Gateway einer jeweiligen Gruppe von Lampen (100, 200, 300) dient, so dass sämtliche Lampen der jeweiligen Gruppe (100, 200, 300) so konfiguriert sind, dass sie mittels bidirektionalem Datenaustausch mit der jeweiligen für eine drahtlose Kommunikation geeigneten Lampe (101, 201, 301) der jeweiligen Lampengruppe (100, 200, 300) gesteuert werden können;
Schritt 002: Suchen mittels der externen drahtlosen Kommunikationsvorrichtung (400) und Identifizieren von für eine drahtlose Kommunikation geeigneten Lampen in der Nähe der externen drahtlosen Kommunikationsvorrichtung (400), Bestimmen für jede für eine drahtlose Kommunikation geeigneten Lampe einer jeweiligen Signalstärke eines drahtlosen Kommunikationssignals für die drahtlose Kommunikation zwischen der externen drahtlosen Kommunikationsvorrichtung (400) und der jeweiligen für eine drahtlose Kommunikation geeigneten Lampe und Sortieren der für eine drahtlose Kommunikation geeigneten Lampen (101, 201, 301) entsprechend der ermittelten jeweiligen Signalstärke in absteigender Reihenfolge;
Schritt 003: Kommunizieren mit der in Schritt 002 identifizierten, für eine drahtlose Kommunikation geeigneten Lampe mit dem in Schritt 002 ermittelten stärksten Signal und Durchführen einer Vernetzung für diese für eine drahtlose Kommunikation geeigneten Lampe, um eine drahtlose Kommunikation mit der externen drahtlosen Kommunikationsvorrichtung (400) herzustellen, wenn die Lampen dieser für eine drahtlose Kommunikation geeigneten Lampe konfiguriert werden müssen, andernfalls Fortfahren mit Schritt 004.
Schritt 004: Kommunizieren mit der nächsten in Schritt 002 identifizierten, für eine drahtlose Kommunikation geeigneten Lampe mit dem in Schritt 002 ermittelten nächststärksten Signal und Durchführen einer Vernetzung für diese für eine drahtlose Kommunikation geeigneten Lampe, um eine drahtlose Kommunikation mit der externen drahtlosen Kommunikationsvorrichtung (400) herzustellen, wenn die Lampen dieser für eine drahtlose Kommunikation geeigneten Lampe konfiguriert werden müssen, andernfalls Fortfahren mit Schritt 005;
Schritt 005: Wiederholen von Schritt 004, bis die Vernetzung mit jeder der in Schritt 002 identifizierten, für eine drahtlose Kommunikation geeigneten Lampen durchgeführt wurde.

2. Verfahren nach Anspruch 1, wobei der Schritt des Durchführens der Vernetzung mit einer jeweiligen für eine drahtlose Kommunikation geeigneten Lampe umfasst:
Steuern eines Zustands der jeweiligen für eine drahtlose Kommunikation geeigneten Lampe, damit dieser sich von den Zuständen sämtlicher anderen in Schritt 002 identifizierten, für eine drahtlose Kommunikation geeigneten Lampen unterscheidet.

3. Verfahren nach Anspruch 2, wobei der Schritt des Steuerns des Zustands der jeweiligen für eine drahtlose Kommunikation geeigneten Lampe, damit dieser sich von den Zuständen sämtlicher anderen in Schritt 002 identifizierten, für eine drahtlose Kommunikation geeigneten Lampen unterscheidet, ferner umfasst:
die jeweilige für eine drahtlose Kommunikation geeignete Lampe blinken lassen.

4. Verfahren nach einem der vorhergehenden Ansprüche, wobei sämtliche Lampen einer jeweiligen Gruppe von Lampen, die der jeweiligen für eine drahtlose Kommunikation geeigneten Lampe zugeordnet sind, in einem einzigen Schritt und unter Verwendung von Parametern konfiguriert werden, wobei die Parameter für sämtliche Lampen einer jeweiligen Gruppe gleich sind, beispielsweise Parameter zur Steuerung der Lichtintensität oder der Lichtfarbe sämtlicher Lampen der jeweiligen Gruppe von Lampen.

5. Verfahren nach einem der Ansprüche 1 bis 3, wobei die Lampen einer jeweiligen Gruppe von Lampen, die der jeweiligen für eine drahtlose Kommunikation geeigneten Lampe zugeordnet sind, in verschiedenen Teilschritten und unter Verwendung verschiedener Parameter konfiguriert werden, beispielsweise Parameter zur Steuerung der Lichtintensität oder der Lichtfarbe der Lampen der jeweiligen Gruppe von Lampen.

6. Verfahren nach einem der vorhergehenden Ansprüche, das ferner umfasst:
Herstellen einer drahtlosen Kommunikation zwischen der externen drahtlosen Kommunikationsvorrichtung (400) und der jeweiligen für eine drahtlose Kommunikation geeigneten Lampe, ausgelöst durch Rütteln der externen drahtlosen Kommunikationsvorrichtung (400).

## Revendications

1. Un procédé de configuration d'un système de commande destiné à commander une pluralité de lampes au moyen d'un dispositif de communication sans fil externe (400), comprenant les étapes suivantes :
étape 001 : installer, dans une zone requise, un système de lampes comprenant au moins deux groupes de lampes (100, 200, 300), chaque groupe de lampes étant constitué d'une pluralité de lampes, chaque lampe comprenant une interface DALI et communiquant en interne via un protocole DALI, dans lequel chaque groupe de lampes comprend une lampe de communication sans fil (101, 201, 301) servant de nœud de communication sans fil pour la communication sans fil avec le dispositif de communication sans fil externe (400), dans lequel chaque lampe de communication sans fil (101, 201, 301) est configurée pour servir d'unité de commande DALI ou de passerelle DALI d'un groupe respectif de lampes (100, 200, 300) de sorte que toutes les lampes du groupe respectif (100, 200, 300) sont configurées pour être commandées au moyen d'un échange de données bidirectionnel avec la lampe de communication sans fil respective (101, 201, 301) du groupe de lampes respectif (100, 200, 300) ;
étape 002 : chercher au moyen du dispositif de communication sans fil externe (400) et identifier des lampes de communication sans fil à proximité du dispositif de communication sans fil externe (400), déterminer pour chaque lampe de communication sans fil d'une intensité de signal respective d'un signal de communication sans fil pour la communication sans fil entre le dispositif de communication sans fil externe (400) et la lampe de communication sans fil respective, et tri des lampes de communication sans fil (101, 201, 301) en fonction de l'intensité de signal respective déterminée, par ordre décroissant ;
étape 003 : communiquer avec la lampe de communication sans fil identifiée à l'étape 002 ayant le signal le plus fort déterminé à l'étape 002 et mettre en réseau cette lampe de communication sans fil afin d'établir une communication sans fil avec le dispositif de communication sans fil externe (400) si les lampes de cette lampe de communication sans fil doivent être configurées, sinon passer à l'étape 004.
étape 004 : communiquer avec la lampe de communication sans fil suivante identifiée à l'étape 002 ayant le signal le plus fort suivant déterminé à l'étape 002 et mettre en réseau cette lampe de communication sans fil afin d'établir une communication sans fil avec le dispositif de communication sans fil externe (400) si les lampes de cette lampe de communication sans fil doivent être configurées, sinon passer à l'étape 005 ;
étape 005 : répéter l'étape 004 jusqu'à ce que la mise en réseau ait été effectuée avec chacune des lampes de communication sans fil identifiées à l'étape 002.

2. Le procédé selon la revendication 1, dans lequel l'étape consistant à effectuer la mise en réseau avec une lampe de communication sans fil respective comprend :
contrôler un état de la lampe de communication sans fil respective afin qu'il soit différent des états de toutes les autres lampes de communication sans fil identifiées à l'étape 002.

3. Le procédé selon la revendication 2, dans lequel l'étape consistant à contrôler l'état de la lampe de communication sans fil respective pour qu'il soit différent des états de toutes les autres lampes de communication sans fil identifiées à l'étape 002 comprend en outre :
faire clignoter la lampe de communication sans fil respective.

4. Le procédé selon l'une quelconque des revendications précédentes, dans lequel toutes les lampes d'un groupe respectif de lampes associées à la lampe de communication sans fil respective sont configurées en une seule étape et à l'aide de paramètres, les paramètres étant les mêmes pour toutes les lampes d'un groupe respectif, tels que des paramètres pour contrôler l'intensité lumineuse ou la couleur lumineuse de toutes les lampes du groupe respectif de lampes.

5. Le procédé selon l'une quelconque des revendications 1 à 3, dans lequel les lampes d'un groupe respectif de lampes associées à la lampe de communication sans fil respective sont configurées dans différentes sous-étapes et à l'aide de différents paramètres, tels que des paramètres pour contrôler l'intensité lumineuse ou la couleur de la lumière des lampes du groupe respectif de lampes.

6. Le procédé selon l'une quelconque des revendications précédentes, comprenant en outre :
installer une communication sans fil entre le dispositif de communication sans fil externe (400) et la lampe de communication sans fil respective, déclenchée par une secousse du dispositif de communication sans fil externe (400).
